# EUROPÄISCHE PATENTANMELDUNG

(11) **EP 0 710 918 A2**
(43) Veröffentlichungstag der Anmeldung: **08.05.1996**
(21) Anmeldenummer: 95117524.9
(22) Anmeldetag: 07.11.1995
(51) Int. Cl.: G06K 7/08

(54) **Analysevorrichtung für Magnetkarten**

(30) Priorität: 07.11.1994 DE 9417457 U
(71) Anmelder: CardTec Entwicklungs- und Vetriebsgesellschaft für elektronische Kartensysteme mbH, D-44795 Bochum (DE)
(72) Erfinder: Künstler, Rainer, D-44795 Bochum (DE)
(74) Vertreter: Behrendt, Arne, Dipl.-Ing.

(57) **Zusammenfassung**

Die Erfindung betrifft eine Analysevorrichtung für Magnetkarten, mit einem Magnetkopf (10), der sich seitlich an einem Kartenkanal befindet. Um eine Analysevorrichtung zur Verfügung zu stellen, die sich exakt und schnell auf die unterschiedlichen genormten Spurlagen der Magnetkarten einstellen läßt, schlägt die Erfindung vor, daß die Analysevorrichtung einen als einspuriger Lesekopf ausgebildeten Magnetkopf (10) aufweist, an der mittels einer Verstellvorrichtung (13, 14, 15) in definierten, mit den verschiedenen genormten Anordnungen der Magnetspuren auf den Magnetkarten korrespondierenden Stellungen einrastbar ist, wobei die jeweilige Rastposition des Magnetkopfes (10) durch Positionierungsdetektoren (18) erfaßbar ist, und daß die Analysevorrichtung eine interne elektronische Datenverarbeitungseinrichtung oder ein Daten-Interface zum Anschluß an eine externe Datenverarbeitungseinrichtung aufweist.

## Beschreibung

Die Erfindung betrifft eine Analysevorrichtung für Magnetkarten mit in Längsrichtung verlaufenden Magnetspuren, mit einem Magnetkopf, der seitlich an einem Kartenkanal angeordnet ist, durch den die Magnetkarten längs hindurch bewegbar sind, wobei der Magnetkopf an einem Positionierschlitten befestigt ist, der mittels einer mechanischen Verstellvorrichtung an geradlinigen Gleitführungen quer zur Längsrichtung des Kartenkanals verschiebbar und in unterschiedlichen Positionen festlegbar ist.

Nach dem Stand der Technik ist eine Vielzahl von Magnetkarten bekannt, die im wesentlichen aus einer kleinen Papier- oder Kunststoffkarte bestehen, die mit in Längsrichtung angeordneten magnetischen Datenträgerstreifen versehen sind.

Naturgemäß tritt bei der Benutzung von Magnetkarten ein Verschleiß der magnetischen Datenträgerschicht auf, und zwar sowohl aufgrund mechanischer Abnutzung durch Reibung beim Einführen in Lesegeräte, als auch magnetisch, beispielsweise durch Diffusionserscheinungen oder unter dem Einfluß äußerer Fremdmagnetfelder. Durch die Abnutzungserscheinungen treten beim Lesen des magnetischen Datenträgers mitunter Lesefehler auf, wodurch die Karte unbrauchbar werden kann.

Um Magnetkarten auf ihre Funktionstüchtigkeit zu überprüfen und verschlissene oder defekte Magnetkarten gegebenenfalls rechtzeitig austauschen zu können, ist es erforderlich, den Dateninhalt des magnetischen Datenträgers auszulesen und zu überprüfen. Damit lassen sich zugleich Fehlfunktionen von Lesegeräten, die häufig sehr stark beansprucht werden, rechtzeitig erkennen und Gegenmaßnahmen treffen.

Hinsichtlich der Anordnung des magnetischen Datenträgers auf der Magnetkarte existieren verschiedene Normen - beispielsweise ISO 1, ISO 2, ISO 3, JIS, Mittelspurlage usw. - die sich hinsichtlich Datenformat und Anordnung des Magnetstreifens auf der Magnetkarte unterscheiden.

Nach dem Stande der Technik sind stationäre Analysevorrichtungen bekannt, mittels derer der Dateninhalt von Magnetkarten lesbar und überprüfbar ist und die gegebenenfalls eine Wiederherstellung beschädigter Daten ermöglichen. Dabei können mit einem einzigen Analysegerät Magnetkarten aller einschlägig bekannten Normen gelesen und geprüft werden. Diese universelle Einsatzmöglichkeit wird beispielsweise dadurch erreicht, daß längs der Wandung des Kartenkanals mehrere Lese- oder Schreib-Lese-Magnetköpfe oder mehrspurige Magnetköpfe mit mehreren Schreib- und/oder Lesespulen angeordnet sind. Je nach Spurlage des Datenträgers der in dem Kartenkanal entlang bewegten Magnetkarte wird jeweils ein entsprechender Magnetkopf bzw. eine Lesespule aktiviert. Ein prinzipielles Problem ergibt sich bei derartigen Anordnungen von Magnetköpfen jedoch daraus, daß mehrspurige Magnetköpfe prinzipbedingt eine breite Gleitfläche haben, um alle möglichen Magnetspuranordnungen innerhalb der Breite der Magnetkarten zu erfassen. Insbesondere für präzise Messungen ist es jedoch unbedingt erforderlich, die Magnetspur genau einzuhalten. Dies hat zur Folge, daß bei breiten, mehrspurigen Magnetköpfen oder bei Verwendung von mehreren separaten Magnetköpfen aufwendige und komplexe Gegendrucksysteme und Führungssysteme erforderlich sind. Außerdem bedingt der komplexe Aufbau einen hohen Arbeits- und Materialaufwand bei der Herstellung, verminderte Betriebssicherheit sowie außerdem hohe Produktions- und Wartungskosten.

Nach dem Stande der Technik (EP 0 216 494 A2) ist auch eine Analysevorrichtung bekannt, bei der ein Magnetlesekopf an einem Positionierschlitten befestigt ist, der mittels einer mechanischen Verstellvorrichtung an geradlinigen Gleitführungen quer zur Längserstreckung des Kartenkanals verschiebbar und in unterschiedlichen Positionen festlegbar ist. Hier wird als Verstellvorrichtung eine von Hand verdrehbare, stufenlos arbeitende Stellschraube verwendet, mit deren Hilfe der Magnetkopf auf die jeweilige Lage des Magnetstreifens der zu prüfenden Karte eingestellt werden kann. Dieser Vorgang ist natürlich umständlich, zeitraubend und insofern schwierig, als die verschiedenen genormten Spurlagen sich teilweise überlappen, so daß man im Einzelfall nicht sicher sein kann, in welcher genormten Spurlage eigentlich gemessen wird. Das wird insbesondere dann problematisch, wenn Wartungspersonal vor Ort bzw. bei den Anwendern Magnetkarten zu prüfen hat, beispielsweise um Reklamationen nachzugehen. Bei dieser Tätigkeit wird eine Analysevorrichtung in Form eines kleinen, kompakten Gerätes benötigt, welches vor Ort und exakt reproduzierbar auf die jeweiligen Spurlagen einstellbar ist, die jeweilige Einstellung automatisch registriert und mit dem Analysevorgang verknüpft.

Es ist Aufgabe der Erfindung, eine kompakte Analysevorrichtung für Magnetkarten zur Verfügung zu stellen, die sich exakt und schnell auf die unterschiedlichen genormten Spurlagen einstellen läßt und sich durch hohe Meßgenauigkeit bei einer einfacheren und betriebssicheren Konstruktion auszeichnet.

Gegenstand der Erfindung ist eine Analysevorrichtung für Magnetkarten mit in Längsrichtung verlaufenden Magnetspuren, mit einem Magnetkopf, der seitlich an einem Datenkanal angeordnet ist, durch den die Magnetkarten längs hindurchbewegbar sind, wobei der Magnetkopf an einem Positionierschlitten befestigt ist, der mittels einer mechanischen Verstellvorrichtung an geradlinigen Gleitführungen quer zur Längserstreckung des Kartenkanals verschiebbar und in unterschiedlichen Positionen festlegbar ist, gekennzeichnet durch
- einen als einspuriger Lesekopf ausgebildeten Magnetkopf, der mittels der Verstellvorrichtung in definierten, mit den verschiedenen genormten Anordnungen der Magnetspuren auf den Magnetkarten korrespondierenden Stellungen einrastbar ist, wobei die jeweilige Rastposition des Magnetkopfes durch Positionsdetektoren erfaßbar ist,
- sowie durch eine interne elektronische Datenverarbeitungseinrichtung oder ein Daten-Interface zum Anschluß an eine externe Datenverarbeitungseinrichtung.

Die Erfindung macht es möglich, die Analysevorrichtung schnell und reproduzierbar auf die Überprüfung von Magnetkarten mit beliebigen genormten Spurlagen einzustellen. Hierdurch ist es möglich, diese Magnetkarten schnell auszumessen und gegebenenfalls zu bearbeiten, wobei auch sich gegenseitig überlagernde Spurlagen, beispielsweise bei ISO 1, JIS, ISO 2, kein Problem darstellen.

Ein besonderer Vorteil liegt darin, daß ein schmal gebauter Magnetkopf verwendet wird, an den beim Prüfvorgang nur ein kleiner Flächenbereich angepreßt zu werden braucht. Infolgedessen kann ein besonders einfaches Andrucksystem verwendet werden, beispielsweise eine einfache federnde Rollenandruckeinrichtung.

Ein weiterer Vorteil des einspurigen Lesekopfes liegt darin, daß keine Störungen durch magnetische Induktionen wie bei Mehrfach-Magnetköpfen - sogenanntes "Cross-talk" oder Übersprechen - auftreten kann. Dadurch nehmen die Zuverlässigkeit beim Lesen und die Meßgenauigkeit zu.

Durch die erfindungsgemäße vorgeschlagenen Positionsdetektoren ist die jeweils eingestellte Spurlage exakt festzustellen und kann in die Datenverarbeitungseinrichtung eingelesen werden. Die Datenverarbeitungseinrichtung ist entweder in der Anlaysevorrichtung selbst vorgesehen oder über einen Daten-Interface an diese anschließbar.

Eine bevorzugte Ausführungsform der Erfindung sieht vor, daß die Verstellvorrichtung eine geradlinig seitlich veschiebbare Schiebeplatte aufweist, die einerseits mit Rastkehlen für Betätigungsnocken der Positionierungsdetektoren und andererseits mit Führungsbahnen versehen ist, in die Führungsstifte des Positionierungsschlittens eingreifen und die mit den verschiedenen Rastposionen zugeordneten Raststufen versehen sind.

Die in der Verstellvorrichtung verwendete Schieberplatte hat in vorteilhafter Weise eine Doppelfunktion, nämlich einerseits als Führungskulisse für den Positionierungskopf und andererseits als Geber für die Positionsdetektoren.

Zweckmäßig sind in dem Kartenkanal vor und hinter dem Magnetkopf Lichtschranken angeordnet. Diese Maßnahme ermöglicht die Erfassung der Bewegungsrichtung einer eingeführten Magnetkarte.

Um einen mobilen, netzunabhängigen Einsatz zu ermöglichen, ist schließlich vorgesehen, daß die Analysevorrichtung eine als Akkumulator ausgebildete Stromversorgung aufweist.

Ein Ausführungsbeispiel einer erfindungsgemäßen Analysevorrichtung wird im folgenden anhand der Zeichnungen näher erläutert. Es zeigen im einzelnen:
Fig. 1: eine perspektivische Außenansicht einer erfindungsgemäßen Analysevorrichtung;
Fig. 2: eine Draufsicht mit abgenommener Deckplatte und Frontplatte der Analysevorrichtung gemäß Fig. 1;
Fig. 3: eine Explosionsdarstellung der Magnetkopfpositioniereinrichtung gemäß Figuren 1, 2;
Fig. 4: eine Frontansicht der Analysevorrichtung nach Fig. 1, teilweise aufgeschnitten dargestellt.

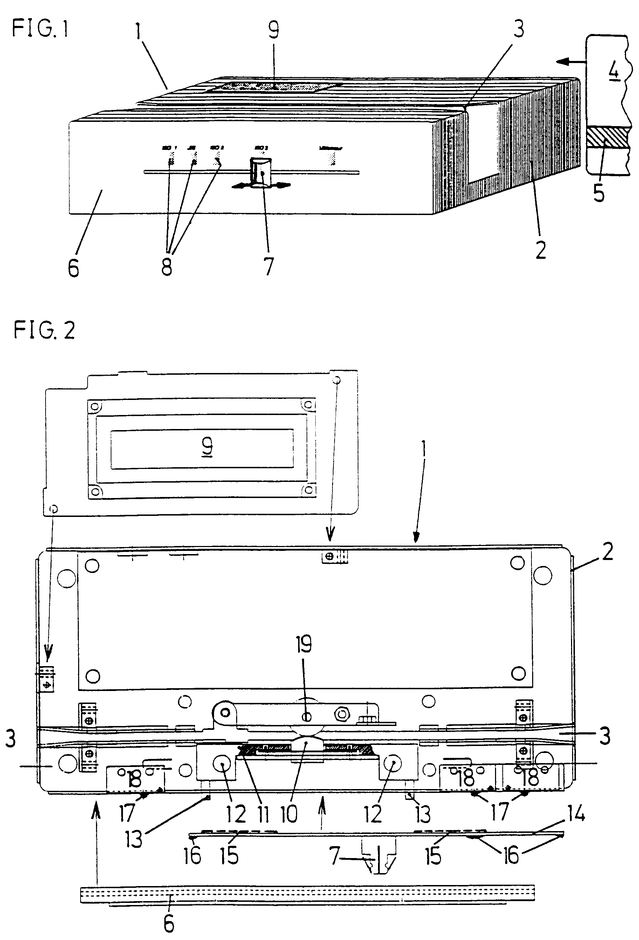

In Figur 1 ist die Analysevorrichtung als Ganzes mit dem Bezugszeichen 1 versehen. Sie ist als manueller Kartendurchzugsleser aufgebaut und weist ein flaches Gehäuse 2 auf, welches mit einem zur Oberseite hin offenen durchgehenden Kartenkanal 3 versehen ist. Der Kartenkanal 3 ist als Durchzugsschlitz ausgebildet für den manuellen Durchzug einer separat dargestellten Magnetkarte 4. Die Magnetkarte 4 weist eine Magnetspur 5 auf, die in Längsrichtung verläuft.

Auf der Frontplatte 6 befindet sich ein seitlich in Pfeilrichtungen verschiebbarer Schiebeknopf 7 sowie eine Anzahl von Positionsmarkierungen 8. Diese können sowohl als aufgedruckte Markierungen als auch als Leuchtanzeigen ausgebildet sein.

Weiterhin befindet sich auf der Oberseite ein Interface-Anschlußstecker 9.

Figur 2 zeigt die Analysevorrichtung 1 aus Figur 1 in einer Draufsicht, wobei die Deckplatte abgenommen ist und die Frontplatte 6 abgerückt dargestellt ist. Es finden dieselben Bezugszeichen wie in Figur 1 Verwendung.

Weiterhin erkennt man einen seitlich in dem Kartenkanal 3 angeordneten Magnetkopf 10, der bevorzugt als einspuriger Lesekopf ausgebildet ist. Der Magnetkopf 10 ist auf einem Positionierschlitten 11 montiert, der auf Gleitbolzen 12 senkrecht zur Zeichnungsebene verschiebbar gelagert ist. Zur Frontseite hin ist der Positionierschlitten 11 mit Führungsstiften 13 versehen, die in eine Schieberplatte 14 einsetzbar sind, welche frontseitig den Schiebeknopf 7 trägt. Beim Aufsetzten der Schieberplatte 14 in Pfeilrichtung von vorn auf die Führungsstifte 13 greifen diese in Führungsbahnen 15 in der Schieberplatte 14 ein, die schematisch gestrichelt dargestellt sind.

Die Schieberplatte 14 ist weiterhin mit Rastkehlen 16 versehen, die mit Betätigungsnocken 17 von Mikroschaltern 18 korrespondieren.

Gegenüber dem Magnetkopf 10 ist in dem Kartenkanal 3 eine federnde Rollen-Andruckeinrichtung 19 angebracht.

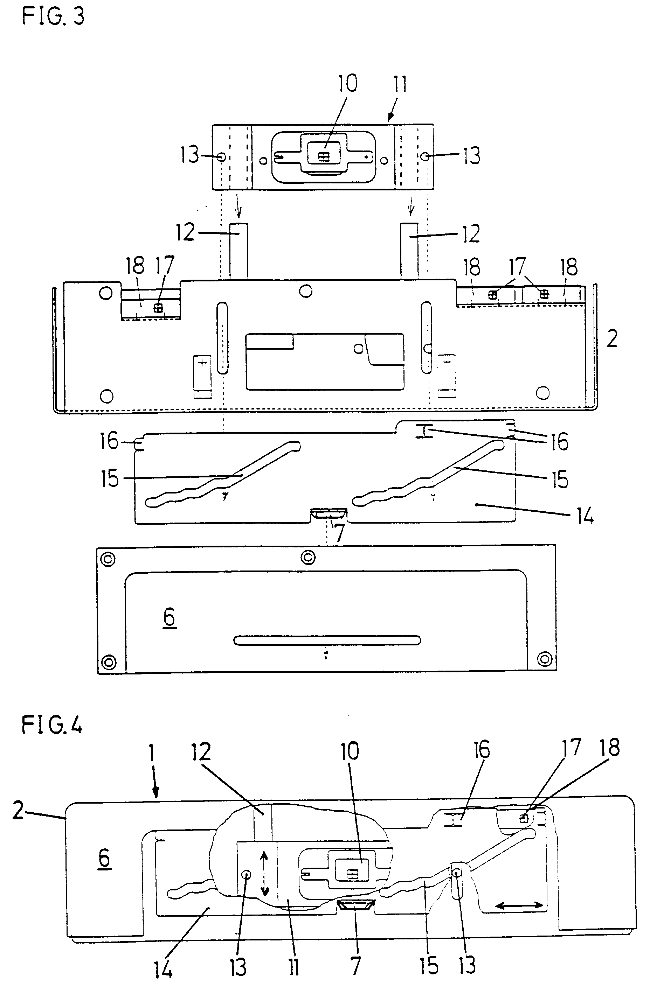

Figur 3 zeigt die Bestandteile der Magnetkopf-Verstellmechanik gemäß Fig. 2 in einer perspektivischen Explosionsdarstellung. Dabei finden dieselben Bezugszeichen Verwendung.

Im einzelnen sind besonders deutlich die Führungsbahnen 15 in der Schieberplatte 14 erkennbar, die stufenartige Rastpositionen für die Führungsstifte 13 aufweisen.

In Figur 4 sind die Einzelteile aus Fig. 3 in zusammengebauten Zustand dargestellt.

Die Handhabung der erfindungsgemäßen Analysevorrichtung 1 ist denkbar einfach: mittels des Schiebeknopfes 7 wird die Schieberplatte 14 seitlich verschoben. Die in deren Führungsbahnen 15 eingreifenden Führungsstifte 13 bewegen dabei den auf den Gleitbolzen 12 verschiebbaren Positionierschlitten 11 und damit gleichzeitig den Magnetkopf 10 quer zu dem Kartenkanal 3 auf oder ab. Somit läßt sich jede mögliche Spureinstellung innerhalb des Kartenkanals 3 vornehmen und damit alle möglichen Spurlagen der Magnetspur 5 auf der Magnetkarte 4 ansteuern.

Die Betätigung wird dadurch wesentlich vereinfacht, daß die Führungsbahn 15 definierte Rastpositionen aufweist, die mit verschiedenen, normierten Anordnungen der Magnetspuren 5 auf den Magnetkarten 4 korrespondieren. Bei jeder dieser Raststellungen wird ferner über die Rastkehlen 16 in der Schieberplatte 14 und über Betätigungsnocken 17 jeweils ein oder mehrere Mikroschalter 18 betätigt. Die Mikroschalter 18 dienen dabei als Positionsdetektoren, deren Schaltstellung entweder über die Positionsmarkierung 8 auf der Frontplatte 6 angezeigt werden und/oder über den Interface-Anschlußstecker 9 an eine externe Datenverarbeitungseinrichtung weitergeleitet werden können.

Bei jeder Spureinstellung des Magnetkopfes 10 wird eine in den Kartenkanal 3 eingeführte Magnetkarte 4 mit der Magnetspur 5 sicher mittels der einfach konzipierten Andruckeinrichtung 9 an den Magnetkopf 10 angepreßt. Damit ist jederzeit eine genaue und zuverlässige Überprüfung des Dateninhaltes von Magnetkarten 4 gewährleistet, indem ein externer Computer an den Interface-Anschlußstecker angeschlossen wird.

Das Gehäuse 2 kann insgesamt klein und handlich ausfallen und gegebenenfalls mit einem nicht dargestellten Akku ausgestattet werden, um netzunabhängigen Betrieb zu ermöglichen.

## Patentansprüche

1. Analysevorrichtung für Magnetkarten (4), mit in Längsrichtung verlaufenden Magnetspuren (5), mit einem Magnetkopf (10), der seitlich an einem Kartenkanal (3) angeordnet ist, durch den die Magnetkarten (4) längs hindurch bewegbar sind, wobei der Magnetkopf (10) an einem Positionierschlitten (11) befestigt ist, der mittels einer Verstellvorrichtung (12, 13, 14), an geradlinigen Gleitführungen (12) in quer zur Längsrichtung des Kartenkanals (3) verschiebbar und in unterschiedlichen Positionen festlegbar ist, **gekennzeichnet durch**,
- einen als einspuriger Lesekopf ausgebildeten Magnetkopf (10), der mittels der Verstellvorrichtung (13, 14, 15) in definierten, mit den verschiedenen genormten Anordnungen der Magnetspuren (5) auf den Magnetkarten (4) korrespondierenden Stellungen einrastbar ist, wobei die jeweilige Rastposition des Magnetkopfes (10) durch Positionierungsdetektoren (18) erfaßbar ist,
- sowie durch eine interne elektronische Datenverarbeitungseinrichtung oder ein Daten-Interface zum Anschluß an eine externe Datenverarbeitungseinrichtung.

2. Analysevorrichtung nach Anspruch 1, dadurch gekennzeichnet, daß die Verstellvorrichtung eine geradlinig seitlich verschiebbare Schieberplatte aufweist, die einerseits mit Rastkehlen (16) für Betätigungsnocken (17) der Positionierungsdetektoren (18) und andererseits mit Führungsbahnen (15) versehen ist, in die Führungsstifte (13) des Positionierungsschlittens (12) eingreifen und die in ihrem Längenbereich den verschiedenen Rastpositionen zugeordneten Raststufen versehen sind.

3. Analysevorrichtung nach den Ansprüchen 1 oder 2, dadurch gekennzeichnet, daß in den Kartenkanal (3) gegenüber dem Magnetkopf (10) eine federne Rollenandruckeinrichtung (19) angeordnet ist.

4. Analysevorrichtung nach Anspruch 1, dadurch gekennzeichnet, daß in dem Kartenkanal (3) vor und hinter dem Magnetkopf (10) Lichtschranken angeordnet sind.

5. Analysevorrichtung nach Anspruch 1, gekennzeichnet durch eine als Akkumulator ausgebildete Stromversorgung.
